# FASCICULE DE BREVET EUROPEEN

(11) **EP 2 547 632 B1**
(45) Date de publication et mention de la délivrance du brevet: **02.04.2014**
(21) Numéro de dépôt: 11713308.2
(22) Date de dépôt: 28.02.2011
(51) Int. Cl.: C04B 24/38, C04B 28/02

(54) **SUSPENSIONS AQUEUSES LIQUIDES DE POLYSACCHARIDE STABLES A LA TEMPERATURE ET LEUR UTILISATION EN TANT QU'AGENT VISCOSANT DANS DES COMPOSITIONS CIMENTAIRES**
TEMPERATURSTABILE FLÜSSIGE WÄSSRIGE POLYSACCHARIDSUSPENSIONEN UND IHRE VERWENDUNG ALS VERDICKUNGSMITTEL FÜR ZEMENTÖSE ZUSAMMENSETZUNGEN
TEMPERATURE-STABLE LIQUID AQUEOUS POLYSACCHARIDE SUSPENSIONS AND USE THEREOF AS THICKENING AGENTS IN CEMENTITIOUS COMPOSITIONS

(30) Priorité: 15.03.2010 FR 1051812
(43) Date de publication de la demande: 23.01.2013
(73) Titulaire: Ciments Français, 92800 Puteaux (FR)
(72) Inventeur: FABBRIS, Faber, F-75012 Paris (FR); MEHALEBI, Soraya, F-78300 Poissy (FR)
(74) Mandataire: Le Cloirec, Claudine
(86) Numéro de dépôt international: PCT/FR2011/050404
(87) Numéro de publication internationale: WO 2011/114036

(56) Documents cités:
- EP-A1- 1 614 669
- WO-A1-02/094734
- US-A- 4 283 229
- US-A- 5 028 263

## Description

La présente invention concerne des suspensions aqueuses liquides stables de polysaccharides ainsi que leur utilisation dans des compositions cimentaires, et les compositions cimentaires les contenant.

Dans de nombreux domaines les polysaccharides tels que les dérivés cellulosiques, comme par exemple l'hydroxyéthylcellulose, sont utilisés pour augmenter la viscosité de compositions. C'est le cas notamment pour les ciments, mortiers et bétons.

Cependant, jusqu'à ce jour, ces polysaccharides sont ajoutés aux compositions cimentaires sous forme solide (poudres) au moment du gâchage avec l'eau ou avant le gâchage.

L'utilisation d'adjuvants sous forme solide peut poser des difficultés de mise en oeuvre, notamment lors de leur stockage, leur dosage ou leur dispersion de manière homogène dans le milieu auquel ils sont ajoutés, plus particulièrement sur les chantiers. Il a alors été recherché d'introduire ces polysaccharides sous forme liquide.

Si les polysaccharides sont solubles à faible concentration dans l'eau, lorsque l'on souhaite augmenter leur concentration au-delà de 5 % en poids par exemple, leur solubilité n'est pas totale et l'on obtient très souvent des compositions à viscosité très importante, voire des compositions pâteuses ou des gels qu'il est ensuite très difficile d'utiliser : transvasement et pompage étant alors très difficiles ou impossibles.

Si, d'autre part, les polysaccharides sont dispersés dans un milieu liquide dans lequel ils ne sont pas solubles, ils engendrent des suspensions liquides en général instables, à cause de la différence de densité entre les particules et le milieu liquide. Ces suspensions peuvent présenter au cours du temps une décantation ou un phénomène de crémage conduisant à un dépôt sur les parois du récipient les contenant. Dans certains cas, ces suspensions présentent l'un des deux phénomènes suite à une variation de température. Dans d'autres, elles peuvent présenter l'un ou l'autre des deux phénomènes (décantation ou crémage) selon la température d'exposition.

Par ailleurs, le brevet US 5,028,263 de la Société AQUALON décrit des suspensions aqueuses de polymères anioniques ou non ioniques tels que des éthers cellulosiques dispersés dans des solutions aqueuses à forte teneur en sel d'ammonium. Or de tels sels ne sont pas compatibles avec une utilisation en milieu cimentaire car ils réagissent avec le Ca(OH)₂ et accélèrent la dégradation du béton.

Le brevet US 4,283,229 décrit des suspensions d'éther de cellulose renfermant de l'alumine très finement divisée. Or l'alumine très finement divisée accélère les temps de prise du ciment, ce qui peut pénaliser, par exemple, la réalisation des chapes autonivelantes, pour lesquelles un maintien rhéologique dans le temps est nécessaire.

De plus, aucun de ces documents ne fait référence à une stabilité à la température des suspensions aqueuses mises en oeuvre.

La présente invention a pour but de pallier les inconvénients ci-dessus en proposant une suspension aqueuse liquide, stable, de polysaccharide(s), qui puisse être utilisée dans des compositions cimentaires.

En effet, Il a été découvert de manière surprenante que la mise en suspension de polysaccharide dans une solution aqueuse d'une certaine force ionique en présence d'une argile de type attapulgite et d'une poudre minérale micronisées permettait de stabiliser ladite suspension de polysaccharide au moins dans une certaine plage de température.

A cet effet, la suspension aqueuse liquide de polysaccharide selon l'invention renferme une concentration massique d'au moins un polysaccharide comprise entre 15 et 35 % sous la forme de particules partiellement hydratées, dispersées dans une solution aqueuse d'un sel de base forte, à l'exclusion de sels d'ammonium, de force ionique comprise entre 1,25 mol/L et 15 mol/L, présentant un pH supérieur à 9, et renferme une attapulgite sous forme micronisée et au moins une poudre minérale non phylliteuse, ci-après dénommée filler, inerte chimiquement dans ladite suspension aqueuse, de granulométrie comprise entre 0,1 et 100 micromètres, conférant à ladite suspension aqueuse une stabilité au moins dans une gamme de température allant de 5 à 30°C.

Ainsi, une forte concentration massique en polysaccharide permet une utilisation de cette suspension aqueuse dans de nombreuses situations et permet d'introduire une forte proportion en polysaccharide sans augmenter la teneur en adjuvant (qui ne doit pas dépasser 5 % de la masse du ciment). En outre, cette stabilité sur une plage de température allant d'au moins 5°C à 30°C autorise leur stockage, transport et mise en oeuvre dans des compositions cimentaires dans la plupart des utilisations, notamment sur chantiers.

La teneur massique en attapulgite de la suspension aqueuse est avantageusement comprise entre 0,1 % et 5 %, de préférence entre 0,2 % et 0,8 %.

Parmi les argiles testés, l'attapulgite (ou polygorskite) est un phyllosilicate qui permet de manière surprenante de stabiliser la suspension de polysaccharides selon l'invention vis-à-vis des variations de température (notamment entre 5 et 30 °C).

Les exemples comparatifs décrits plus loin dans la description montrent que d'autres argiles telles que la bentonite ou la kaolinite, aux mêmes concentrations, ne sont pas du tout efficaces.

De manière avantageuse, le filler est un filler siliceux, de préférence cristallin, de masse volumique comprise entre 2,60 et 2,80 g/mL. Il peut s'agir par exemple de silice micronisée.

De préférence, ce filler présente une courbe granulométrique dont la valeur D50 est comprise entre 1 et 12 micromètres, de préférence entre 2 et 8 micromètres.

Sa teneur massique est avantageusement comprise entre 0,1 et 5 %, de préférence entre 0,35 et 1,5 % de ladite suspension aqueuse.

La concentration massique préférée en polysaccharide(s) est comprise entre 18 et 25 % de ladite suspension aqueuse.

La suspension aqueuse est réalisée par la préparation tout d'abord de la solution aqueuse de force ionique comprise entre 1,25 mol/L et 15 mol/L, de préférence comprise entre 2,5 mol/L et 12,5 mol/L et avantageusement entre 5 et 10 mol/L.

Le sel de base forte utilisé pour préparer cette solution aqueuse peut être, par exemple, K₂CO₃, K₃PO₄, Na₂CO₃, ou NaH₂PO₄. On évite également dans cette solution, si l'on souhaite mettre en oeuvre ladite suspension dans le domaine cimentaire, la présence d'halogénures, ainsi que celle des sulfates.

Le polysaccharide se présente sous la forme d'une poudre sèche et sa courbe granulométrique à sec présente une valeur D50 comprise entre 10 et 200 µm, de préférence entre 50 et 150 µm.

De manière avantageuse, le polysaccharide est choisi parmi une hydroxy alkyl cellulose ou un hydroxy alkyl guar comportant un groupement alkyl en C₂ à C₈, une gomme diutan ou un mélange de ceux-ci.

L'hydroxy alkyl cellulose peut être choisie parmi une hydroxy ethyl cellulose (HEC), une méthyl-hydroxy-propyl cellulose (MHPC), une hydroxyéthylcellulose modifiée hydrophobe (HM HEC), ou un mélange de celles-ci.

Dans le domaine cimentaire il s'est avéré que la suspension aqueuse selon l'invention est tout à fait appropriée comme agent viscosant, et il a été constaté de manière surprenante que ce dernier ne réduit pas l'étalement des compositions cimentaires dans lesquelles il est incorporé, notamment dans le cas où le polysaccharide utilisé est une hydroxyalkylcellulose.

La présente invention concerne donc l'utilisation de la suspension aqueuse liquide susmentionnée en tant qu'agent viscosant pour augmenter la viscosité de compositions cimentaires, et plus particulièrement, dans le cas où le polysaccharide utilisé est une hydroxyalkylcellulose, sans affecter leur étalement.

Ainsi, la présente invention porte également sur une composition cimentaire à base de ciment et d'eau caractérisée en ce qu'elle renferme, en tant qu'agent viscosant, une suspension aqueuse liquide telle que mentionnée ci-dessus en une teneur comprise entre 0,1 et 5 % environ en poids de ciment, de préférence entre 0,1 et 2 % en poids de ciment.

La présente invention va être illustrée à l'aide des exemples non limitatifs suivants :

### EXEMPLES :

### Exemple 1 - Comparatif

Une solution aqueuse de carbonate de potassium (K₂CO₃) est préparée selon une concentration massique de 32 g de K₂CO₃ dans 100 g d'eau. La force ionique de cette solution est voisine de 7 mol/L.

Si l'on introduit un polysaccharide tel que hydroxy éthyl cellulose dans cette solution, selon des fractions massiques comprises entre 18 et 22 % en poids, on constate que les particules ne se dissolvent pas et que cette suspension présente une séparation de phase sous la forme d'un crémage visible au bout de 12 h de stockage. Ce crémage correspond à environ 1/10^{ème} de la hauteur de la suspension.

La masse volumique de la solution est ici à 20°C de 1,2296 g/mL. Pour éviter cette tendance au phénomène de crémage, il peut être possible soit de réduire la masse volumique de la phase aqueuse (solution de K₂CO₃), soit d'augmenter la masse volumique de la suspension (particules de HEC).

La première solution est difficilement réalisable, il a donc été envisagé d'agir sur la densité des particules en suspension en les chargeant d'une substance solide qui peut, par exemple, rester solidaire des particules d'hydroxy éthyl cellulose hydratées en suspension.

Il s'avère que dans le cas présent, les particules sèches de HEC présentent un D50 de 85 micromètres. Des fillers siliceux ont été envisagés en vue de leur stabilité chimique vis-à-vis de la solution de K₂CO₃. Différents fillers de différentes granulométries ont été testés, ces fillers siliceux présentant une densité comprise entre 2,6 et 2,7. Ces fillers sont présentés dans le tableau 1 ci-dessous.

**Tableau 1 - Granulométrie des fillers sélectionnés**

| | **> 5 µm** | **D50** | **D10** | **D90** |
|---|---|---|---|---|
| **Filler siliceux A** | 77 % | 11 µm | 32 µm | 3 µm |
| **Filler siliceux B** | 57,4 % | 5,8 µm | 13,7 µm | 2,21 µm |
| **Filler siliceux C** | 33,8 % | 3,6 µm | 9,9 µm | 1,54 µm |
| **Filler siliceux D** | 13,7 % | 2,4 µm | 5,7 µm | 1,0 µm |

Les effets de ces différents fillers sur la suspension de référence sont présentés dans le tableau 2 ci-après.

Les fillers ont été ajoutés sous agitation à la solution de K₂CO₃ avant que l'ajout du polysaccharide hydroxy éthyl cellulose. Après un repos de 12 heures, on observe (voir tableau 2) que les suspensions renfermant du filler B, C et D présentent un faible crémage, dont la fraction de la hauteur est inférieure à 1/20, plus faible que la suspension de référence, et celle avec le filler A.

Le filler B a donc été retenu pour la suite en considérant que des fillers à granulométrie plus fine et donc un niveau de broyage supérieur (c'est-à-dire à coût supérieur) ne présentent pas d'avantages significatifs.

Pour ces échantillons ainsi que pour les essais des exemples ci-après, a été mis en oeuvre l'appareillage dénommé Turbiscan®. Le Turbiscan® est un dispositif dont le fonctionnement est basé sur la diffusion de la lumière. Un faisceau laser investit un échantillon à l'intérieur d'un tube à essai. Selon la taille, la concentration et l'état de surface des particules, une fraction de la lumière est transmise dans la même direction d'incidence et une fraction est rétrodiffusée en différentes directions. Deux capteurs mesurent l'intensité du signal transmis (angle de déflection 0°) et du signal rétrodiffusé (angle de déflection égal à 135°). La source lumineuse se déplace sur toute la hauteur de l'échantillon mettant ainsi en évidence les éventuelles différences de composition et notamment une séparation de phases (brusques variations des signaux de lumière transmise ou rétrodiffusée en fonction de la hauteur). Les fractions d'intensité transmises et rétrodiffusées peuvent alors être représentées en fonction de la hauteur de l'échantillon. De ces graphiques sont déduites les hauteurs de chacune des phases permettant de quantifier la séparation de phases.

Dans les exemples ci-après, la stabilité à 12 h exprime la valeur arrondie, et la mesure Turbiscan® 12 heures la valeur plus précise en %, de la fraction de la hauteur de la phase séparée : une fraction positive représente un phénomène de crémage, une fraction négative représente un phénomène de décantation.

**Tableau 2 - Comparaison de l'effet de différents fillers sur la formule de référence**

| | **Sans filler** | **Filler A** | **Filler B** | **Filler C** | **Filler D** |
|---|---|---|---|---|---|
| **K₂CO₃** | 32 g | 32 g | 32 g | 32 g | 32 g |
| **Eau** | 100 g | 100 g | 100 g | 100 g | 100 g |
| **HEC** | 37,22 g | 37,22 g | 37,22 g | 37,22 g | 37,22 g |
| **Filler stabilisateur** | - | 1,7 g | 1,7 g | 1,7 g | 1,7 g |
| **Conc. Sol. Saline** | 32 g/100 mL | 32 g/100 mL | 32 g/100 mL | 32 g/100 mL | 32 g/100 mL |
| **Fract. Mass HEC** | 22 % | 22% | 22 % | 22 % | 22 % |
| ρₛₒₗ **à 20°C** | 1,2296 g/mL | 1,2296 g/mL | 1,2296 g/mL | 1,2296 g/mL | 1,2296 g/mL |
| **Stabilité à 12 h** | Crémage | Crémage | Crémage | Crémage | Crémage |
| Fraction hauteur | < 1/10 | < 1/10 | < 1/20 | < 1/20 | < 1/20 |
| **Mesure Turbiscan 12 h** | 7,82 % | 6,96% | 3,12 % | 3,22 % | 3,05 % |

### Exemple 2 - Comparatif

Afin de vérifier si la variation d'un dosage en filler permettait de lester suffisamment les particules hydratées d'hydroxy éthyl cellulose, différentes concentrations ont été testées. Elles étaient comprises entre 1 et 2 % en poids. Les résultats sont présentés dans le tableau 3 ci-dessous.

**Tableau 3 - Variation du dosage en filler B (1 % - 2 %)**

| | **Sans filler** | **1 %** | **1,2 %** | **1,4 %** | **1,6 %** | **1,8 %** | **2 %** |
|---|---|---|---|---|---|---|---|
| **K₂CO₃** | 32 g | 32 g | 32 g | 32 g | 32 g | 32 g | 32 g |
| **Eau** | 100 g | 100 g | 100 g | 100 g | 100 g | 100 g | 100 g |
| **HEC** | 37,22 g | 37,22 g | 37,22 g | 37,22 g | 37,22 g | 37,22 g | 37,22 g |
| **Filler stabilisateur** | - | 1,70 g | 2,059 g | 2,405 g | 2,75 g | 3,097 g | 3,46 g |
| **Conc. Sol. Saline** | 32 g/100 mL | 32 g/100 mL | 32 g/100 mL | 32 g/100 mL | 32 g/100 mL | 32 g/100 mL | 32 g/100 mL |
| **Fract. Mass HEC** | 22% | 22 % | 22% | 22 % | 22% | 22 % | 22% |
| ρₛₒₗ **à 20°C** | 1,2296 g/mL | 1,2296 g/mL | 1,2296 g/mL | 1,2296 g/mL | 1,2296 g/mL | 1,2296 g/mL | 1,2296 g/mL |
| **Mesure Turbiscan 12 h** | 7,82 % | 3,12 % | < 0,1 % | < 0,1 % | -1,7 % déc. | -2,69 % déc. | -3,5 % déc. |

| | | | | | | | |
|---|---|---|---|---|---|---|---|
| déc. = décantation | | | | | | | |

On remarque que les concentrations de 1,2 % et de 1,4 % présentent après 12 heures, un phénomène de crémage limité. Au-dessus, les concentrations supérieures ou égales à 1,6 % en filler favorisent une décantation.

La stabilité en température de la suspension à 1,2 % massique en filler a été évaluée entre 5 et 35°C (voir tableau 4). Le protocole utilisé pour contrôler cette stabilité en température est le suivant :
Une quantité d'environ 500 mL de suspension est préparée puis fractionnée en six échantillons qui sont exposés à des températures différentes (respectivement 5, 10, 15, 20, 25 et 35°C) pendant 12 heures. Ces échantillons sont ensuite soumis à une mesure de fraction de la lumière selon la méthode du Turbiscan® (décrit dans l'exemple 1 ci-dessus).

Après avoir ramené les échantillons à la température de 20°C, les mesures de stabilité sont répétées. Enfin, les échantillons sont soumis à une agitation et soumis à nouveau à une mesure à 20°C afin de détecter une éventuelle irréversibilité des transformations intervenues avec la température.

Après le retour à 20°C, les échantillons avec filler exposés préalablement à 5 et 10°C présentent un crémage important. Pour les échantillons à 25°C, on observe une séparation de phase intermédiaire. On constate donc que des variations de température affectent la stabilité de ces suspensions aqueuses d'hydroxy éthyl cellulose avec filler, ce qui peut présenter des inconvénients, notamment lors de leur stockage.

**Tableau 4 - Stabilité en température de la formule de référence avec filler (1,2 %)**

| | **5°C** | **10°C** | **15°C** | **20°C** | **25°C** | **35°C** |
|---|---|---|---|---|---|---|
| Après 12 h | -1 % (déc.) | < 0,1 % | -5,5 % (déc.) | < 0,1 % | < 0,1 %* | < 0,1 % |
| Après retour à 20°C | 4,44 % | 2% | < 0,1 % | - | < 0,1 %* | < 0,1 % |

| | | | | | | |
|---|---|---|---|---|---|---|
| * séparation de phase intermédiaire | | | | | | |

### Exemple 3

Dans la formulation de référence renfermant 1,2 % massique de filler B a donc été introduit sous forme sèche 0,5 % massique d'attapulgite (commercialisée sous le nom Attagel 50 - particules de 0,1 µm et de densité 2,4). La composition de la suspension est présentée dans le tableau 5.

Les tests de stabilité à la température ont été effectués et il s'avère que ceux-ci sont tout à fait satisfaisants comme visible sur le tableau 6.

La stabilité de ces suspensions est nettement améliorée, grâce à la présence de ce filler et d'attapulgite.

**Tableau 5 - Formulation de référence avec filler (1,2 %) et attapulgite (0,5 %)**

| **Composant** | **Masse, g (%)** |
|---|---|
| K₂CO₃ | 32 g |
| Eau | 100 g |
| Hydroxyéthylcellulose | 37,23 g (22 %) |
| Filler B | 2,059 g (1,2 %) |
| Attapulgite | 0,865 g (0,5 %) |
| Stabilité à 12 h | < 0,1 % |

**Tableau 6 - Stabilité à la température de la formule de référence avec filler à 1,2 % et attapulgite à 0,5 %**

| | **5°C** | **10°C** | **15°C** | **20°C** | **25°C** | **35°C** |
|---|---|---|---|---|---|---|
| Repos 12 h | < 0,1 % | < 0,1 % | < 0,1 % | < 0,1 % | -0,5% | -1,2 % |
| Après retour à 20°C | < 0,1 % | < 0,1 % | < 0,1 % | - | -0,2 % | -0,9 % |

### Exemple 4

Différentes concentrations en attapulgite ont été testées. Celles-ci sont présentées dans le tableau 7 ci-dessous.

**Tableau 7 - Formulation de référence avec filler (1,2 %) et attapulgite en quantités variables**

| **Composant** | **Masse (g)** | | | | |
|---|---|---|---|---|---|
| **K₂CO₃** | 32 g | 32 g | 32 g | 32 q | 32 g |
| Eau | 100 g | 100 g | 100 g | 100 g | 100 g |
| Hydroxyéthylcellulose (22 %) | 37,23 g | 37,23 g | 37,23 g | 37,23 g | 37,23 g |
| Filler B (1,2 %) | 2,059 g | 2,059 g | 2,059 g | 2,059 g | 2,059 g |
| Attapulgite | - | 0,173 g | 0, 346 g | 0,865 g | 1,384 g |
| % massique | 0 % | 0,1 % | 0,2 % | 0,5 % | 0,8 % |

Les stabilités à la température de ces différentes suspensions ont été testées et elles sont présentées dans le tableau 8 ci-après.

**Tableau 8 - Stabilité à la température de la formule de référence avec filler à 1,2 % et attapulgite variable**

| **Sans attapulgite** | | | | | | |
|---|---|---|---|---|---|---|
| | **5°C** | **10°C** | **15°C** | **20°C** | **25°C** | **35°C** |
| Repos 12 h | -1,00 % | < 0,1 % | -5,50 % | < 0,1 % | < 0,1 % | < 0,1 % |
| Après retour à 20°C | 4,44 % | 2,00 % | 0,10 % | - | 0,10% | 0,10 % |

| **Attapulgite à 0,1 %** | | | | | | |
|---|---|---|---|---|---|---|
| | **5°C** | **10°C** | **15°C** | **20°C** | **25°C** | **35°C** |
| Repos 12 h | -1,00 % | < 0,1 % | -1,83 % | < 0,1 % | < 0,1 % | < 0,1 % |
| Après retour à 20°C | 2,82 % | 1,83 % | -2,65 % | - | < 0,1 % | 0,10 % |

| **Attapulgite à 0,2 %** | | | | | | |
|---|---|---|---|---|---|---|
| | **5°C** | **10°C** | **15°C** | **20°C** | **25°C** | **35°C** |
| Repos 12 h | -1,00 % | < 0,1 % | 0,2 % | < 0,1 % | < 0,1 % | < 0,1 % |
| Après retour à 20°C | -1,3 % | 0,2 % | 0,32 % | - | < 0,1 % | 0,10 % |

| **Attapulgite à 0,5 %** | | | | | | |
|---|---|---|---|---|---|---|
| | **5°C** | **10°C** | **15°C** | **20°C** | **25°C** | **35°C** |
| Repos 12 h | < 0,1 % | < 0,1 % | < 0,1 % | < 0,1 % | -0,5 % | -1,2 % |
| Après retour à 20°C | < 0,1 % | < 0,1 % | < 0,1 % | - | -0,2 % | -0,9 % |

| **Attapulgite à 0,8 %** | | | | | | |
|---|---|---|---|---|---|---|
| | **5°C** | **10°C** | **15°C** | **20°C** | **25°C** | **35°C** |
| Repos 12 h | 0,91 % | 0,25 % | < 0,1 % | < 0,1 % | -0,7 % | -1,3 % |
| Après retour à 20°C | 0,65 % | < 0,1 % | < 0,1 % | - | -0,25 % | -0,7 % |

Les résultats de stabilité à la température sont nettement améliorés en présence d'attapulgite et plus particulièrement à partir d'une teneur massique de 0,2 % d'attapulgite dans la suspension aqueuse.

### Exemple 5 - Comparatif

Dans les mêmes conditions opératoires, si l'on maintient une concentration en attapulgite de 0,5 % et que l'on omet le filler les résultats de stabilité sont très médiocres. On constate à 24 heures un crémage important représentant 6 % de la hauteur de l'échantillon (voir tableau 9).

Ceci confirme que la combinaison de filler et d'attapulgite est essentielle, la présence combinée d'attapulgite et de filler confère une synergie dans la stabilité à la température de la suspension aqueuse de polysaccharide.

**Tableau 9 - Formulation de référence avec attapulgite et sans filler**

| **Composant** | **Masse, g (%)** |
|---|---|
| K₂CO₃ | 32 g |
| Eau | 100 g |
| Hydroxyéthylcellulose | 37,23 g (22 %) |
| Filler B | - |
| Attapulgite | 0,865 g (0,5 %) |
| Stabilité à 24 h | 6% |

### Exemple 6 - Essais avec différents polysaccharides

Différents polysaccharides ont été testés tous à des concentrations massiques de 22 % de la suspension aqueuse. Il s'agit de :
- L'hydroxy éthyl cellulose (HEC) : dérivé cellulosique (éther cellulosique) préparé à partir d'un polysaccharide naturel modifié dont la chaîne principale est la cellulose (β-D-Glucose) éthérifié au moyen d'une base forte et d'oxyde éthylène pour obtenir l'hydroxy éthyl cellulose avec un nombre de mol de substituant (MS) par unité de β-D-Glucose de 2,5 (commercialisé sous le nom NATROSOL GXR, présentant un degré de polymérisation voisin de 1.000).
- L'hydroxy éthyl cellulose à haut degré de polymérisation HEC (HDP) (commercialisé sous le nom NATROSOL 250 HHXR) : il s'agit de la même molécule que l'hydroxy éthyl cellulose décrite ci-dessus avec un degré de polymérisation supérieur compris entre 30.000 et 100.000 environ.
- La méthyl hydroxy propyl cellulose (MHPC) : ce dérivé cellulosique présente deux types de substituants au niveau des groupements OH de la cellulose, à savoir des groupements méthoxyles (-O-CH₃) et d'hydroxy propyl (-O-CH₂-CH(OH)-CH₃). Le degré de substitution des méthoxyles est compris entre 1,17 et 2,33 et, le degré de substitution des hydroxy proyl est compris entre 0,05 et 0,8. Le degré de polymérisation du motif cellulosique est compris entre 220 et 300, ce qui confère à la molécule une masse molaire moyenne comprise entre 40.000 et 50.000. Ce polysaccharide est commercialisé sous le nom CULMINAL MHPC 500-PF.
- L'hydroxy éthyl cellulose modifié hydrophobe (HMHEC) : ce dérivé cellulosique présente deux types de substituants au niveau des groupements OH de la molécule de glucose, à savoir des hydroxy éthyles (-O-CH₂-CH₂-OH) et des groupements alkyl avec un nombre de carbones compris entre 8 et 25, et est commercialisé sous le nom NEXTON D2500W. Le nombre de moles de substituants par unité β-D-glucosidique est voisin de 2,5.
- L'hydroxy propylguar (HPG) : ce polysaccharide présente une chaîne principale constituée par une succession de résidus mannoses (β-1→4)-D-mannopyranose avec un groupement latéral (1→6) constitué par un résidu galactose (avec un ratio mannose/galactose compris entre 1,5 et 2) ; à la place de certains groupements -OH de la molécule naturelle sont présents des groupements hydroxy proyles (introduits par éthérification). La molécule est commercialisée par la Société LAMBERTI sous le nom ESACOL HS30.
- Gomme Diutan : ce polysaccharide d'origine naturelle est non modifié et présente une chaîne principale constituée par la succession des résidus →4)-L-rhamnopyranosyl-(α-1→3)-D-glucopyranosyl-(β-1→4)-D-glucuronopyranosyl-(β-1→4)-D-glucopyranosyl-(β→, avec un groupement latéral de deux résidus rhamnopyranoses (L-glucopyranosyl (α-1→4)-L-glucopyranosyl (α-1→3)) liés au carbone 3 du (β-1→4)-D-glucopyranosyl-(β-1→4) de la chaîne principale. Son poids moléculaire est d'environ 5 millions. Il est commercialisé sous la dénomination KELCOCRETE 200.

Ces polysaccharides ont tous été testés dans des conditions identiques, à savoir à 22 % massique dans la suspension aqueuse en présence de filler à 0,4 % ou 1,2 % et d'attapulgite à 0,5 % (voir tableau 10). L'ensemble des suspensions renfermant ces polysaccharides a présenté des performances intéressantes vis-à-vis de la stabilité à la température (voir les résultats regroupés dans le tableau 11).

**Tableau 10**

| **Composant** | **Masse (g) (%)** | | | | | |
|---|---|---|---|---|---|---|
| K₂CO₃ | 32 | 32 | 32 | 32 | 32 | 32 |
| Eau | 100 | 100 | 100 | 100 | 100 | 100 |
| Polysaccharide | HEC 37,23 (22 %) | HEC (HDP) 37,23 (22 %) | MHPC 37,23 (22 %) | HMHEC 37,23 (22 %) | HPG 37,23 (22 %) | Gomme Diutan 37,23 (22 %) |
| Filler B | 0,686 (0,4 %) | 2,059 (1,2 %) | 0,686 (0,4 %) | 0,686 (0,4 %) | 0,686 (0,4 %) | 0,686 (0,4 %) |
| Attapulgite | 0,865 (0,5 %) | 0,865 (0,5 %) | 0,865 (0,5 %) | 0,865 (0,5 %) | 0,865 (0,5 %) | 0,865 (0,5 %) |
| Stabilité à 12h | < 0,1 % | < 0,05 % | < 0,1 % | < 0,1 % | 2,08 % | < 0,1 % |

### Légende :

HEC = hydroxy éthyl cellulose (NATROSOL 250 GXR)
HEC (HDP) = hydroxy éthyl cellulose à haut degré de polymérisation (NATROSOL 250 HHXR)
MHPC = méthyl-hydroxy-propylcellulose (CULMINAL MHPC 500-PF)
HMHEC = hydroxyethylcellulose modifiée hydrophobe (NEXTON D2500W)
HPG = Hydroxy propylguar (ESACOL HS30)
Gomme Diutan = (KELCOCRETE 200)

**Tableau 11 - Stabilité à la température des suspensions des différents polysaccharides du tableau 10**

| | | **5°C** | **10°C** | **15°C** | **20°C** | **25°C** | **35°C** |
|---|---|---|---|---|---|---|---|
| **HEC (HDP)** | Repos 12h | < 0,1 % | < 0,1 % | < 0,1 % | < 0,1 % | < 0,1 % | -0,13 % |
| | Après retour à 20°C | < 0,1 % | < 0,1 % | < 0,1 % | - | < 0,1 % | -0,2 % |
| **MHPC** | Repos 12h | < 0,1 % | < 0,1 % | < 0,1 % | < 0,1 % | < 0,1 % | < 0,1 % |
| | Après retour à 20°C | < 0,1 % | < 0,1 % | < 0,1 % | - | < 0,1 % | < 0,1 % |
| **HMHEC** | Repos 12h | < 0,1 % | < 0,1 % | < 0,1 % | < 0,1 % | < 0,1 % | < 0,1 % |
| | Après retour à 20°C | < 0,1 % | < 0,1 % | < 0,1 % | - | < 0,1 % | < 0,1 % |
| **HPG** | Repos 12h | < 0,1 % | < 0,1 % | < 0,1 % | < 0,1 % | 3,59 % | - |
| | Après retour à 20°C | 4,35 % | 3,38 % | 1,96 % | - | 2,40% | - |
| **Gomme Diutan à 22 %** | Repos 12h | < 0,1 % | < 0,1 % | < 0,1 % | < 0,1 % | < 0,1 % | < 0,1 % |
| | Après retour à 20°C | < 0,1 % | < 0,1 % | < 0,1 % | - | < 0,1 % | < 0,1 % |

| Comparatif | | | | | | | |
|---|---|---|---|---|---|---|---|
| **Gomme Diutan à 2,2 %** | Repos 12h | -32,84 % | -32,28 % | 34,14 % | -34,51 % | -35,63 % | - |
| | Après retour à 20°C | -30,60 % | -30,04 % | -30,70 % | - | < 0,1 % | - |

A titre de comparaison, la gomme Diutan a été testée à une concentration divisée par 10, à savoir à 2,2 % massique. Toutes ces suspensions ont présenté une décantation après repos de 12 heures à différentes températures.

A titre également de comparaison, ont été testés d'autres polysaccharides comportant sur les chaînes glucosidiques des groupements acyle, tels que par exemple la gomme Gellan (non déacylée) ou la carboxyméthylcellulose (CMC). Les mélanges de ces polysaccharides avec la solution aqueuse de K₂CO₃ sont impossibles, les flocs se développant très rapidement et conduisant à un mélange pâteux pratiquement solide. Des observations similaires ont été faites avec la gomme Xanthane qui possède également des groupements acyle.

### Exemple 7 - Comparatif

La bentonite a été testée en remplacement de l'attapulgite.

Si l'on compare avec le résultat obtenu à l'exemple 3 dans les mêmes conditions, la bentonite ne permet pas une stabilité à 24 heures : on constate un important phénomène de crémage et tous les échantillons présentent un déphasage à valeur négative c'est-à-dire une décantation lors des essais de stabilité à la température (voir tableau 13).

**Tableau 12 - Formulation de référence avec filler (1,2 %) et bentonite (0,5 %)**

| **Composant** | **Masse, g (% massique)** |
|---|---|
| K₂CO₃ | 32 g |
| Eau | 100 g |
| Hydroxyéthylcellulose | 37,23 g (22 %) |
| Filler B | 2,059 g (1,2 %) |
| Bentonite | 0,865 g (0,5 %) |
| Stabilité à 24 h | 9% |

**Tableau 13 - Stabilité à la température de la formule de référence avec filler à 1,2 % et bentonite à 0,5 %**

| | **5°C** | **10°C** | **15°C** | **20°C** | **25°C** | **35°C** |
|---|---|---|---|---|---|---|
| Repos 12 h | < 0,1 % | -3,87 % | -7,84 % | -9 % | - | -14,1 % |
| Après retour à 20°C | -2,3 % | -9,6 % | -13,3 % | - | - | -14,2 % |

### Exemple 8 - Comparatif

Les essais avec une autre argile, la kaolinite, montrent des comportements identiques à ceux observés avec la bentonite avec une aggravation. Les suspensions sont très instables, on note une décantation à 24 heures ainsi que lors des différents essais à différentes températures (voir tableau 15).

**Tableau 14 - Formulation de référence avec filler (1,2 %) et kaolinite (0,5 %)**

| **Composant** | **Masse, g (% massique)** |
|---|---|
| K₂CO₃ | 32 g |
| Eau | 100 g |
| Hydroxyéthylcellulose | 37,23 g (22 %) |
| Filler B | 2,059 g (1,2 %) |
| Kaolinite | 0,865 g (0,5 %) |
| Stabilité à 24 h | -19,08 % |

Tableau 15 - Stabilité à température de la formule de référence avec filler à 1,2 % et kaolinite à 0,5 %

| | **5°C** | **10°C** | **15°C** | **20°C** | **25°C** | **35°C** |
|---|---|---|---|---|---|---|
| Repos 12 h | -18,3 % | -20,06 % | -13,5 % | -19,08 % | - | -32,1 % |
| Après retour à 20°C | -15,0 % | -26,2 % | -19,5 % | - | - | 28,1 % |

### Exemple 9 (comparatif) : Absence de sel

A titre de comparaison, ont été testées des suspensions aqueuses de polysaccharides en l'absence de sel K₂CO₃ avec les mêmes polysaccharides et dans les mêmes conditions que pour l'exemple 6. Il s'est avéré impossible, pour tous les polysaccharides, de réaliser une suspension aqueuse, en raison de la formation, dans tous les cas, d'agglomérats importants.

### Exemple 10 - Agent viscosant pour composition cimentaire

Dans certains cas il est souhaitable d'augmenter la viscosité des compositions cimentaires sans altérer leur étalement (qui est une fonction décroissante du seuil d'écoulement).

Dans le cas particulier des bétons auto-plaçants (BAP) pour lesquels une viscosité minimale est nécessaire pour assurer la bonne cohésion du système lors de sa mise en place, des agents viscosants sont introduits.

La suspension aqueuse stable de polysaccharide présentée dans les exemples ci-dessus a été testée en comparaison avec un agent viscosant du commerce, ici le composé Rhéomatrix 100 de la Société BASF.

La suspension aqueuse de polysaccharide selon l'invention qui a été mise en oeuvre ici est celle correspondant à l'exemple 3 et dénommée ci-après RETEXP. Les essais ont été réalisés sur une pâte de ciment composée de :
- 130 g de ciment,
- 78 g d'eau
- 0,65 g de superplastifiant (CIMFLUID ADAGIO 4019) soit 0,5 % en masse par rapport au ciment.

Le tableau 16 regroupe les paramètres de seuil d'écoulement et de viscosité mesurés sur des compositions cimentaires renfermant des proportions variables en agent viscosant.

La viscosité et le seuil sont mesurés avec un rhéomètre rotationnel AR1000 de la Société TA Instruments, équipé d'une géométrie de type "vane", en appliquant une succession décroissante de paliers de contrainte à échéance logarithmique (20 par décade). La viscosité et le seuil d'écoulement sont déduits en modélisant la courbe obtenue avec la loi d'Herschel-Bulkley.

**Tableau 16 - Mesure de seuil et de viscosité**

| Adjuvant | (% en poids de ciment) | Seuil (Pa.s) | Viscosité (Pa.s) |
|---|---|---|---|
| Sans adjuvant | | 0,5885 | 0,073 |
| Rhéomatrix 100 | 0,2% | 1,85 | 0,093 |
| | 0,4 % | 2,31 | 0,064 |
| | 0,6% | 3,167 | 0,02 |
| | 0,8 % | 3,64 | 0,02 |
| | 1% | 9,93 | 1,2 |
| | | | (décantation) |
| RETEXP | 0,2 % | 0,46 | 0,11 |
| | 0,4 % | 0,41 | 0,12 |
| | 0,6% | 0,33 | 0,138 |
| | 0,8 % | 0,32 | 0,15 |
| | 1% | 0,27 | 0,17 |

Nous constatons que le produit Rhéomatrix 100 se présente plutôt comme un agent "seuillant" (comme défini dans la demande de brevet FR 07/05568 du même demandeur).

La suspension aqueuse selon l'invention RETEXP induit une augmentation de la viscosité de la composition cimentaire sans augmenter le seuil d'écoulement qui est au contraire réduit (ce qui constitue au contraire un avantage).

Ceci est confirmé par le tableau 17 qui mesure l'étalement immédiatement après le malaxage du mortier (mesuré selon le protocole MBE* mis au point par le CTG) d'un mortier de composition ci-après :
- 680 g de ciment,
- 1350 g de sable MBE*
- 303 g d'eau,
- 8,16 g de superplastifiant (CIMFLUID ADAGIO 4019), soit 1,2 % de la masse de ciment
(* La méthode du mortier de béton équivalent (MBE). Un nouvel outil d'aide à la formulation des bétons adjuvantés. A. Schwatzentruber, C. Catherine, Materials and structures, Vol. 33, October 2000, pp 475-482)

Différents adjuvants ont été testés, le RETEXP et certains composants de cette suspension aqueuse RETEXP, à savoir HEC l'hydroxy éthyl cellulose, le sel K₂CO₃ et l'attapulgite dans des quantités égales à celles de leur présence dans le RETEXP.

**Tableau 17 - Mesure de l'étalement**

| **Adjuvant** | **%** | **Etalement (mm)** |
|---|---|---|
| Aucun | - | 345 |
| RETEXP | 0,35 | 363 |
| HEC | 0,075 | 362 |
| **K₂CO₃** | 0,065 | 340 |
| Attapulgite | 0,0018 | 345 |

Le K₂CO₃ seul et l'attapulgite seul n'ont pas d'influence sur l'étalement. Ils ne sont donc pas à l'origine des propriétés constatées, c'est donc bien la présence du polysaccharide qui permet la surprenante légère augmentation de l'étalement, malgré l'augmentation de la viscosité induite par l'ajout du polysaccharide.

En conséquence, le RETEXP peut être facilement utilisé sur site puisqu'il s'agit d'une suspension aqueuse liquide qui peut être aisément introduite dans la composition cimentaire avant ou au moment du gâchage.

La suspension aqueuse selon l'invention est donc tout à fait appropriée en tant qu'agent viscosant pour composition cimentaire.

### Exemple 11 - Etalement et viscosité de béton autoplaçant

Il a été également constaté que la suspension aqueuse selon l'invention RETEXP permet de conférer à une composition cimentaire de type béton autoplaçant, des propriétés adéquates à la fois d'étalement mais également de viscosité et d'aptitude au passage (passing ability), ainsi que des résistances à la ségrégation.

A cet effet, une composition de béton telle que présentée dans le tableau 17 a été mise en oeuvre avec différents adjuvants :
- soit aucun adjuvant : béton de référence avec filler,
- soit en présence à la fois d'un agent viscosant et d'un agent seuillant c'est-à-dire un béton sans filler (colonne 2), conforme à la demande de brevet FR 07/05568 du même demandeur,

- soit avec un béton sans filler avec un volume de pâte réduit avec seulement un seul agent viscosant,
- soit un béton sans filler avec seulement l'adjuvant liquide RETEXP (colonne de droite) selon la présente invention, également avec un volume de pâte cimentaire réduit.

Les paramètres suivants ont été mesurés :
- l'étalement selon la norme NF EN 12350-2 à différents intervalles de temps à compter du gâchage t₀ jusqu'à t_{120 min}
- le test au V funnel à t₀ et t_{60 min} qui permet à la fois de tester la viscosité et l'aptitude au remplissage d'un béton autoplaçant. Un entonnoir en forme de V est rempli avec du béton frais et on mesure le temps nécessaire (en secondes) au béton pour s'écouler de cet entonnoir. La valeur obtenue mesure le temps d'écoulement du V funnel, Ce test est décrit en détail dans le document *The European Guidlines for Self Compacting Concrete* (Mai 2005 Self Compacting Concrete European Projet Group - S.C.C.E.P.G.) ;
- le test de la L-box (décrit dans le même document) qui consiste à laisser écouler un volume mesuré de béton frais horizontalement à travers des espaces ménagés entre des barreaux verticaux. Le béton est introduit dans la partie verticale du caisson en forme de L et s'écoule dans la partie horizontale et l'on mesure la hauteur écoulée dans cette partie à l'extrémité de la branche horizontale du L du caisson. La mesure présentée dans le tableau 18 exprime la "passing ability", et est égale au rapport de la hauteur du béton à l'extrémité de la partie horizontale du caisson sur la hauteur du béton restant dans la portion verticale du caisson ;
- la stabilité au tamis (méthode de mesure présentée dans le même document), le résultat indique le pourcentage de béton passant à travers un tamis pendant un temps donné ;
- la résistance à la compression (Rc) est mesurée à 7 jours et à 28 jours.

**Tableau 18**

| Constituants (Kg/m³) (% poids/ciment) | Béton de référence avec filler | Béton sans filler V_{ρ} = 370 L | Béton sans filler à V_{ρ} = 350 L | Béton sans filler à V_{ρ} = 350 L adjuvant liquide |
|---|---|---|---|---|
| Ciment | 320 | 372 | 350 | 350 |
| Eau efficace | 200 | 227 | 213 | 213 |
| Filler | 110 | 0 | 0 | 0 |
| Sable (0/4 mm) | 876 | 876 | 904 | 904 |
| Gravillons (4/14 mm) | 709 | 709 | 732 | 732 |
| Superplastifiant | 3,13 (0,95 %) | 2,70 (0,73%) | 3,01 (0,86 %) | 3,01 (0,86 %) |
| Agent "viscosant"* | 0 | 0,84 (0,225 %) | 0,63 (0,18 %) | 3,15 (liq.) 0,9% |
| Agent "seuillant"** | 0 | 0,093 (0,025 %) | | |
| Volume de pâte | 370 L | 370 L | 350 L | 350 L |

| Etalement | | | | |
|---|---|---|---|---|
| à t₀ | 665 mm | 665 mm | 610 mm | 600 mm |
| à t_{30 min} | 650 mm | 650 mm | 670 mm | 680 mm |
| à t_{45 min} | 605 mm | - | - | - |
| à t_{60 min} | 595 mm | 690 mm | 680 mm | 660 mm |
| à t_{90 min} | - | 685 mm | 660 mm | 650 mm |
| à t_{120 min} | 410 mm) | 680 mm | 630 mm | 600 mm |
| Vfunnel à t₀ | 3,6 s | 2,8 s | 2,6 s | 3,2 s |
| Vfunnel à t_{60 min} | - | - | 3,3 s (t₁₂₀) | 2,9 s |
| L-box | 0,9 | 0,89 | 0,9 | 0,89 |
| Stabilité au tamis | 17% | 16% | 6% | 8 % |

| Résistance à la compression | | | | |
|---|---|---|---|---|
| 7 jours | 34,5 MPa | 22,3 MPa | 24,3 MPa | 30,5 MPa |
| 28 jours | 41,2 MPa | 33,5 MPa | 35,8 MPa | 36,7 MPa |

| | | | | |
|---|---|---|---|---|
| * L'agent "viscosant" est le NATROSOL 250 GXR (HEC) **L'agent "seuillant" est l'ESACOL MX 144 (hydroxy propyl guar) | | | | |

Les résultats présentés dans le tableau 18 montrent que la formulation de béton autoplaçant avec l'adjuvant RETEXP présente, avec un volume de pâte réduit, un meilleur étalement de t=30 min jusqu'à t = 120 min, une meilleure stabilité au tamis, par rapport à la formulation avec 110 kg/m³ de filler qui présente une "sur-résistance" à la compression à 28 jours.

## Revendications

1. Suspension aqueuse liquide de polysaccharide renfermant une concentration massique d'au moins un polysaccharide comprise entre 15 et 35 % sous la forme de particules partiellement hydratées, dispersées dans une solution aqueuse d'un sel de base forte, à l'exclusion de sels d'ammonium, de force ionique comprise entre 1,25 mol/L et 15 mol/L, présentant un pH supérieur à 9, et renfermant une attapulgite sous forme micronisée et au moins une poudre minérale non phylliteuse, ci-après dénommée filler, inerte chimiquement dans ladite suspension aqueuse, de granulométrie comprise entre 0,1 et 100 micromètres, conférant à ladite suspension aqueuse une stabilité au moins dans une gamme de température allant de 5 à 30 °C.

2. Suspension aqueuse selon la revendication 1, **caractérisée en ce que** la teneur massique en attapulgite est comprise entre 0,1 % et 5 %, de préférence entre 0,2 % et 0,8 %.

3. Suspension aqueuse selon l'une des revendications 1 ou 2, **caractérisée en ce que** la solution aqueuse présente une force ionique comprise entre 2,5 mol/L et 12,5 mol/L.

4. Suspension aqueuse selon l'une quelconque des revendications précédentes, **caractérisée en ce que** le filler est un filler siliceux, de préférence cristallin, de masse volumique comprise entre 2,60 et 2,80 g/mL.

5. Suspension aqueuse selon quelconque des revendications précédentes, **caractérisée en ce que** le filler présente une courbe granulométrique dont la valeur D50 est comprise entre 1 et 12 micromètres, de préférence entre 2 et 8 micromètres.

6. Suspension aqueuse selon quelconque des revendications précédentes, **caractérisée en ce que** la teneur massique en filler est comprise entre 0,1 et 5 %, de préférence entre 0,35 et 1,5 % de ladite suspension aqueuse.

7. Suspension aqueuse selon quelconque des revendications précédentes, **caractérisée en ce que** la concentration massique en polysaccharide(s) est comprise entre 18 et 25 % de ladite suspension aqueuse.

8. Suspension aqueuse selon l'une quelconque des revendications précédentes, **caractérisée en ce que** le polysaccharide présente, à sec, une courbe granulométrique dont la valeur D50 est comprise entre 10 et 200 µm, de préférence entre 50 et 150 µm.

9. Suspension aqueuse selon quelconque des revendications précédentes, **caractérisée en ce que** le polysaccharide est choisi parmi une hydroxy alkyl cellulose ou un hydroxy alkyl guar comportant un groupement alkyl en C₂ à C₈, une gomme diutan ou un mélange de ceux-ci.

10. Suspension aqueuse selon la revendication 9, **caractérisée en ce que** l'hydroxy alkyl cellulose est choisie parmi une hydroxyl ethyl cellulose (HEC), une méthyl-hydroxy-propyl cellulose (MHPC), une hydroxyéthylcellulose modifiée hydrophobe (HM HEC), ou un mélange de celles-ci.

11. Utilisation de la suspension aqueuse liquide selon l'une quelconque des revendications précédentes en tant qu'agent viscosant, pour augmenter la viscosité des compositions cimentaires.

12. Utilisation d'une suspension aqueuse liquide selon la revendication 10 en tant qu'agent viscosant, pour augmenter la viscosité des compositions cimentaires, sans affecter leur étalement.

13. Composition cimentaire à base de ciment et d'eau, **caractérisée en ce qu'**elle renferme, en tant qu'agent viscosant, une suspension aqueuse liquide selon l'une quelconque des revendications 1 à 10 en une teneur comprise entre 0,1 et 5 % en poids de ciment.

## Patentansprüche

1. Flüssige wässrige Polysaccharidsuspension mit einer Massenkonzentration mindestens eines Polysaccharids zwischen 15 und 35 % inklusive in Form von teilweise hydratierten, in einer wässrigen Lösung eines starken Basensalzes, bei Ausschluss der Ammoniumsalze, verteilten Partikeln mit einer Ionenstärke zwischen 1,25 mol/L und 15 mol/L inklusive, einem pH über 9 und einem Attapulgit in mikronisierter Form und mindestens ein nichtphyllitisches, in der wässrigen Suspension chemisch inertes Mineralpulver, nachfolgend als Filler bezeichnet, mit einer Korngröße zwischen 0,1 und 100 Mikrometer inklusive, das der wässrigen Suspension eine Stabilität in mindestens einem Temperaturbereich von 5 bis 30 °C verleiht.

2. Wässrige Suspension nach Anspruch 1, **dadurch gekennzeichnet, dass** der Massengehalt an Attapulgit zwischen 0,1 % und 5 %, vorzugsweise zwischen 0,2 % und 0,8 %, inklusive ist.

3. Wässrige Suspension nach einem der Ansprüche 1 oder 2, **dadurch gekennzeichnet, dass** die wässrige Lösung eine Ionenstärke zwischen 2,5 mol/L und 12,5 mol/L inklusive aufweist.

4. Wässrige Suspension nach einem der vorangehenden Ansprüche, **dadurch gekennzeichnet, dass** der Filler ein silikathaltiger, vorzugsweise kristalliner Filler mit einer Dichte zwischen 2,60 und 2,80 g/mL inklusive ist.

5. Wässrige Suspension nach einem der vorangehenden Ansprüche, **dadurch gekennzeichnet, dass** der Filler eine Korngrößenkurve aufweist, deren Wert D50 zwischen 1 und 12 Mikrometer, vorzugsweise zwischen 2 und 8 Mikrometer, inklusive ist.

6. Wässrige Suspension nach einem der vorangehenden Ansprüche, **dadurch gekennzeichnet, dass** der Massengehalt an Filler zwischen 0,1 und 5 %, vorzugsweise zwischen 0,35 und 1,5 %, inklusive der wässrigen Suspension ist.

7. Wässrige Suspension nach einem der vorangehenden Ansprüche, **dadurch gekennzeichnet, dass** die Massenkonzentration an Polysaccharid(en) zwischen 18 und 25 % inklusive der wässrigen Suspension ist.

8. Wässrige Suspension nach einem der vorangehenden Ansprüche, **dadurch gekennzeichnet, dass** das Polysaccharid trocken eine Korngrößenkurve aufweist, deren Wert D50 zwischen 10 und 200 µm, vorzugsweise zwischen 50 und 150 µm, inklusive ist.

9. Wässrige Suspension nach einem der vorangehenden Ansprüche, **dadurch gekennzeichnet, dass** das Polysaccharid aus einer Hydroxyalkylcellulose oder einem Hydroxyalkylguar mit einer C₂-C₈-Alkylgruppe, einem Diutangummi oder einem Gemisch derselben ausgewählt ist.

10. Wässrige Suspension nach Anspruch 9, **dadurch gekennzeichnet, dass** die Hydroxyalkylcellulose aus einer Hydroxylethylcellulose (HEC), einer Methylhydroxypropylcellulose (MHPC), einer modifizierten hydrophoben Hydroxyethylcellulose (HM HEC) oder einem Gemisch derselben ausgewählt ist.

11. Verwendung der flüssigen wässrigen Suspension nach einem der vorangehenden Ansprüche als Verdickungsmittel, um die Viskosität von Zementzusammensetzungen zu erhöhen.

12. Verwendung einer flüssigen wässrigen Suspension nach Anspruch 10 als Verdickungsmittel, um die Viskosität von Zementzusammensetzungen zu erhöhen, ohne ihre Ausbreitung zu beeinträchtigen.

13. Zementzusammensetzung auf der Basis von Zement und Wasser, **dadurch gekennzeichnet, dass** sie als Verdickungsmittel eine flüssige wässrige Suspension nach einem der Ansprüche 1 bis 10 in einem Gehalt zwischen 0,1 und 5 Gew.-% des Zements einschließt.

## Claims

1. A liquid aqueous suspension of polysaccharide containing a mass concentration of at least one polysaccharide comprised between 15 and 35% in the form of partly hydrated particles, dispersed in an aqueous solution of a strong base salt, excluding ammonium salts, with an ionic force comprised between 1.25 mol/L and 15 mol/L, having a pH greater than 9, and containing an attapulgite in micronized form and at least one chemically inert non-phyllitous mineral powder, designated as a filler hereafter, in said aqueous suspension, with a grain size comprised between 0.1 and 100 micrometers, imparting to said aqueous suspension, stability at least in a range of temperatures from 5 to 30°C.

2. The aqueous suspension according to claim 1, **characterized in that** the attapulgite mass content is comprised between 0.1% and 5%, preferably between 0.2% and 0.8%.

3. The aqueous suspension according to claims 1 or 2, **characterized in that** the aqueous solution has an ionic force comprised between 2.5 mol/L and 12.5 mol/L.

4. The aqueous suspension according to any of the preceding claims, **characterized in that** the filler is a siliceous preferably crystalline filler with a density comprised between 2.60 and 2.80 g/mL.

5. The aqueous suspension according to any of the preceding claims, **characterized in that** the filler has a grain size curve, the D₅₀ value of which is comprised between 1 and 12 micrometers, preferably between 2 and 8 micrometers.

6. The aqueous suspension according to any of the preceding claims, **characterized in that** the filler mass content is comprised between 0.1 and 5%, preferably between 0.35 and 1.5% of said aqueous suspension.

7. The aqueous suspension according to any of the preceding claims, **characterized in that** the mass concentration of polysaccharide(s) is comprised between 18 and 25% of said aqueous suspension.

8. The aqueous suspension according to any of the preceding claims, **characterized in that** the polysaccharide under dry conditions has a grain size curve, the D₅₀ value of which is comprised between 10 and 200 µm, preferably between 50 and 150 µm.

9. The aqueous suspension according to any of the preceding claims, **characterized in that** the polysaccharide is selected from a hydroxyalkylcellulose or a hydroxyalkylguar including a C₂-C₈ alkyl group, a diutan gum or a mixture thereof.

10. The aqueous suspension according to claim 9, **characterized in that** the hydroxyalkylcellulose is selected from hydroxyethylcellulose (HEC) methyl-hydroxy-propylcellulose (MHPC), a hydrophobically modified hydroxyethylcellulose (HM HEC), or a mixture thereof.

11. The use of the liquid aqueous suspension according to any of the preceding claims as a viscosifying agent, for increasing the viscosity of cement compositions.

12. The use of a liquid aqueous suspension according to claim 10 as a viscosifying agent, for increasing the viscosity of cement compositions, without affecting their spreading.

13. A cement composition based on cement and water, **characterized in that** it contains as a viscosifying agent, a liquid aqueous suspension according to any of claims 1 to 10 with a content comprised between 0.1 and 5% by weight of cement.
